# EUROPEAN PATENT APPLICATION

(11) **EP 3 778 193 A1**
(43) Date of publication of application: **17.02.2021**
(21) Application number: 18912946.3
(22) Date of filing: 30.03.2018
(51) Int. Cl.: B29C 64/214, B22F 3/105, B22F 3/16, B29C 64/153, B29C 64/393, B33Y 30/00, B33Y 50/00, B33Y 50/02

(54) **BLADE, THREE-DIMENSIONAL LAMINATE SHAPING DEVICE, METHOD FOR CONTROLLING THREE-DIMENSIONAL LAMINTE SHAPING DEVICE, AND PROGRAM FOR CONTROLLING THREE-DIMENSIONAL LAMINATE SHAPING DEVICE**

(71) Applicant: Cmet Inc., Yokohama-shi, Kanagawa 222-0033 (JP); Technology Research Association For Future Additive Manufacturing, Chuo-ku, Tokyo 103-0027 (JP)
(72) Inventor: MIYANO Hideaki, Yokohama-shi, Kanagawa 222-0033 (JP); OOBA Yoshikazu, Yokohama-shi, Kanagawa 222-0033 (JP); SUZUKI Koukichi, Yokohama-shi, Kanagawa 222-0033 (JP); SUWA Mitsunori, Yokohama-shi, Kanagawa 222-0033 (JP)
(74) Representative: TBK
(86) International application number: PCT/JP2018/013883
(87) International publication number: WO 2019/187108

(57) **Abstract**

A three-dimensional laminating and shaping object is shaped accurately. A blade used in a three-dimensional laminating and shaping apparatus for flattening a surface of a powder material spread on a shaping table while moving horizontally, comprises a bottom surface in contact with the surface of the powder material, and a projection extended from the bottom surface in at least one of moving directions along which the blade moves.

## Description

### TECHNICAL FIELD

The present invention relates to a blade, a three-dimensional laminating and shaping apparatus, a method for controlling the three-dimensional laminating and shaping apparatus, and a program for controlling the three-dimensional laminating and shaping apparatus.

### BACKGROUND ART

In the above technical field, patent literature 1 discloses a technique that flattens the surface of a powder material by using a squeegeeing blade having a rectangular section when viewed from a plane parallel to the traveling direction.

### CITATION LIST

### PATENT LITERATURE

Patent literature 1: Japanese Patent Laid-Open No. 2012-241261

### SUMMARY OF THE INVENTION

### TECHNICAL PROBLEM

In the technique described in the above literature, however, the powder material supplied by recoating is sometimes dragged and curled up when the surface of the powder material is flattened, and this may destroy the alreadyshaped three-dimensional laminating and shaping object.

The present invention provides a technique of solving the above-described problem.

### SOLUTION TO PROBLEM

One example aspect of the present invention provides a blade used in a three-dimensional laminating and shaping apparatus for flattening a surface of a powder material spread on a shaping table while moving horizontally, comprising:
a bottom surface in contact with the surface of the powder material; and
a projection extended from the bottom surface in at least one of moving directions along which the blade moves.

Another example aspect of the present invention provides a three-dimensional laminating and shaping apparatus comprising:
at least one blade described above;
a recoater that recoats a powder material used for shaping a three-dimensional laminating and shaping object above a shaping table; and
a controller that controls an operation of the recoater and an operation of the at least one blade.

Still other example aspect of the present invention provides a method for controlling the abovementioned three-dimensional laminating and shaping apparatus, comprising:
recoating a powder material used for shaping a three-dimensional laminating and shaping object above a shaping table; and
controlling an operation of the recoater, an operation of the two blades, and an operation of the other blade.

Still other example aspect of the present invention provides a computer program for causing a computer to execute a method, the method comprising:
recoating a powder material used for shaping a three-dimensional laminating and shaping object above a shaping table; and
controlling an operation of the recoater, an operation of the two blades, and an operation of the other blade.

### ADVANTAGEOUS EFFECTS OF INVENTION

According to the present invention, an already shaped three-dimensional laminating and shaping object is not destroyed.

### BRIEF DESCRIPTION OF DRAWINGS

Fig. 1 is a block diagram showing the arrangement of a three-dimensional laminating and shaping apparatus according to the first example embodiment of the present invention;
Fig. 2A is a schematic view for explaining an outline of the arrangement of a three-dimensional laminating and shaping apparatus according to the second example embodiment of the present invention;
Fig. 2B is a view for explaining a blade of the three-dimensional laminating and shaping apparatus according to the second example embodiment of the present invention;
Fig. 2C is a view for explaining squeegeeing by the blade of the three-dimensional laminating and shaping apparatus according to the second example embodiment of the present invention;
Fig. 2D is a perspective view for explaining the blade of the three-dimensional laminating and shaping apparatus according to the second example embodiment of the present invention;
Fig. 3 is a flowchart for explaining the procedure of the three-dimensional laminating and shaping apparatus according to the second example embodiment of the present invention;
Fig. 4 is a view for explaining a three-dimensional laminating and shaping apparatus according to the third example embodiment of the present invention;
Fig. 5 is a flowchart for explaining the procedure of the three-dimensional laminating and shaping apparatus according to the third example embodiment of the present invention;
Fig. 6 is a view for explaining a three-dimensional laminating and shaping apparatus according to the fourth example embodiment of the present invention;
Fig. 7 is a flowchart for explaining the procedure of the three-dimensional laminating and shaping apparatus according to the fourth example embodiment of the present invention;
Fig. 8 is a view for explaining a three-dimensional laminating and shaping apparatus according to the fifth example embodiment of the present invention;
Fig. 9 is a flowchart for explaining the procedure of the three-dimensional laminating and shaping apparatus according to the fifth example embodiment of the present invention;
Fig. 10 is a view for explaining a three-dimensional laminating and shaping apparatus according to the sixth example embodiment of the present invention;
Fig. 11 is a flowchart for explaining the procedure of the three-dimensional laminating and shaping apparatus according to the sixth example embodiment of the present invention; and
Fig. 12 is a view for explaining other examples of a blade of a three-dimensional laminating and shaping apparatus according to the seventh example embodiment of the present invention.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

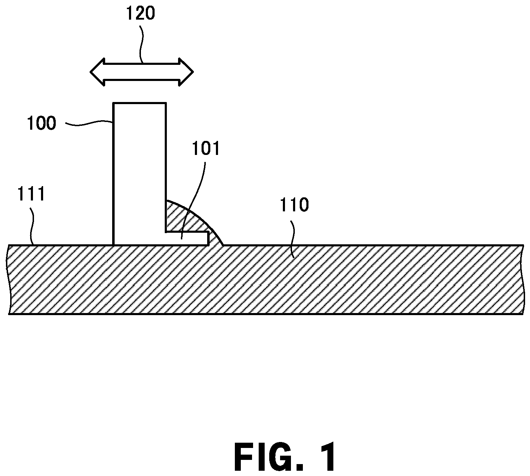

A blade 100 as the first example embodiment of the present invention will be explained with reference to Fig. 1. The blade 100 is mounted on a three-dimensional laminating and shaping apparatus, and used to flatten a powder material recoated above a shaping table and used for shaping a three-dimensional laminating and shaping object.

As shown in Fig. 1, the blade 100 has a projection 101. In the three-dimensional laminating and shaping apparatus, the blade 100 has a bottom surface 102 in contact with a surface of a powder material 110 recoated, and flattens the surface of the powder material 110 spread above the shaping table while moving horizontally. In at least one of moving directions 120 along which the blade 100 moves, the blade 100 has a projection 101 extended in the moving directions 120 from the bottom surface 102.

According to this embodiment, an already shaped three-dimensional laminating and shaping object is not destroyed.

### [Second Example Embodiment]

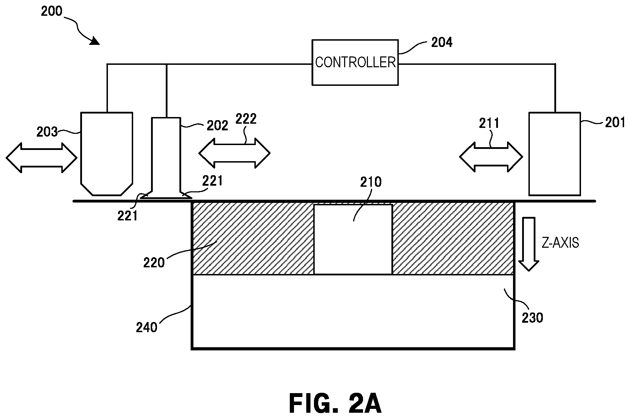

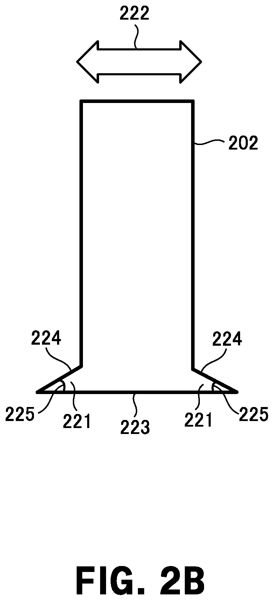

A three-dimensional laminating and shaping apparatus according to the second example embodiment of the present invention will be explained below with reference to Figs. 2A to 3. Fig. 2A is a schematic view for explaining the arrangement of a three-dimensional laminating and shaping apparatus 200 according to this example embodiment. Fig. 2B is a view for explaining a blade 202 of the three-dimensional laminating and shaping apparatus 200 according to this example embodiment. The three-dimensional laminating and shaping apparatus 200 includes a recoater 201, the blade 202, a binder applicator 203, and a controller 204.

The recoater 201 recoats a powder material 220 used for shaping a three-dimensional laminating and shaping object 210 above a shaping table 230. The recoater 201 includes, for example, a hopper that stores the powder material 220, and a recoat member that recoats the stored powder material 220 above the shaping table 230. The powder material 220 used for shaping the three-dimensional laminating and shaping object 210 is, for example, a powder of a metal such as aluminum, iron, or copper, or a powder of plastic, resin, or the like, but is not limited to these materials. The recoater 201 reciprocates above the shaping table 230 in moving directions 211.

The blade 202 is a member that flattens the powder material 220 which is recoated above the shaping table 230 by the recoater 201, and is called a squeegeeing blade or the like. The powder material 220 supplied and recoated from the recoater 201 remains, when recoated above the shaping table 230, a mass of the powder material 220 rising like a mound. Even when shaping the object by processing the rising mass-like powder material 220, the three-dimensional laminating and shaping object 210 having a desired shape cannot be obtained.

To obtain the three-dimensional laminating and shaping object 210 having a desired shape, the blade 202 flattens the powder material 220 supplied and recoated from the recoater 201, and removes a part of the powder material 220, which is excessively supplied by recoating, thereby forming one flat powder material layer. The blade 202 forms one flat powder material layer by flattening and removing the powder material 220, while reciprocating above the shaping table 230 in traveling directions 222 (moving directions).

The blade 202 has two projections 221 extended in the two moving directions (the traveling directions 222). The two projections 221 are formed on the side close to the shaping table 230 of the blade 202 (the lower end of the blade 202) . Also, the projections 221 are formed on the both sides of the blade 202 when viewed from a plane parallel to the traveling directions 222 of the blade 202. That is, when one of the traveling directions 222 of the blade 202 is a forward direction and the other is a reverse direction, the blade 202 has the projections 221 for the forward and reverse directions.

A bottom surface 223 of the blade 202 is a contact surface in contact with the shaping table 230 or the powder material 220 supplied and recoated above the shaping table 230, and the projections 221 have inclined portions 224 that make acute angles with the bottom surface 223. That is, each of angles 225 between the bottom surface 223 and the inclined portions 224 is an acute angle. The angle 225 can be any angle as long as the angle is an acute angle. The angle 225 is determined in accordance with, for example, the flowability or the weight of the powder material 220. The angle 225 is, for example, 30°. The sectional shape of the blade 202, which is formed by the plane parallel to the traveling directions 222 of the blade 202, is the shape of a conical flask. That is, the blade 202 has a shape in which the foundation of the trunk is wide, the trunk gradually narrows upward (the inclined portions 224), and the width of the trunk becomes constant from a given position.

The binder applicator 203 applies a binder as a binding agent to a powder material layer formed above the shaping table 230 by spraying the binder. The binder applicator 203 includes, for example, an inkjet head or the like, and applies the binder to the powder material layer by spraying the binder from the inkjet head. Since the powder material 220 is coated with a chemical agent, a portion to which the binder is applied hardens, and then shaping of one flat powder material layer is complete. When shaping of one flat powder material layer is complete, the shaping table 230 is moved down in the Z-axis direction by the thickness of one flat powder material layer, and recoating, flattening and shaping of the next flat powder material layer are performed.

The three-dimensional laminating and shaping object 210 is shaped in a shaping tank 240 by repeating the recoating of the powder material 220 by the recoater 201, the formation of the flat powder material layer by the blade 202, and the application of the binder by the binder applicator 203 a predetermined number of times.

The controller 204 controls the operation of the recoater 201 and the operation of the blade 202. The controller 204 can also control the operation of the binder applicator 203. For example, the controller 204 controls the recoater 201 to recoat a predetermined amount of the powder material 220 above the shaping table 230. When the predetermined amount of the powder material 220 has been recoated above the shaping table 230 by the recoater 201, the controller 204 controls the operation of the blade 202 to flatten the powder material 220 which is recoated above the shaping table 230 while removing an extra powder material 220, thereby forming a surface 250 of the powder material 220. The surface 250 of the powder material 220 is flat.

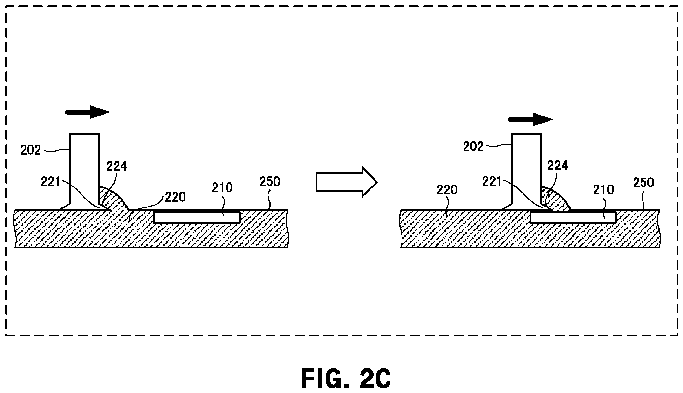

Fig. 2C is a view for explaining squeegeeing by the blade 202 of the three-dimensional laminating and shaping apparatus 200 according to this example embodiment. As shown in Fig. 2C, the blade 202 performs squeegeeing while moving from the left to the right. The blade 202 removes the powder material 220 by cutting off or scraping away the powder material 220 by the inclined portion 224 and the projection 221. In this case, the projection 221 of the blade 202 enters a portion between the rising mass-like powder material 220 supplied by recoating and the surface 250, as it sneaks into that portion. That is, the projection 221 of the blade 202 enters a portion between the rising mass-like powder material 220 (a mass of the powder material 220 in the uppermost layer) supplied by recoating immediately before squeegeeing and the powder material 220 supplied by recoating below that (a flat surface of the powder material 220 in the uppermost layer). When the blade 202 passes over the three-dimensional laminating and shaping object 210, therefore, the blade 202 does not drag the powder material 220 of the new powder material layer, so the three-dimensional laminating and shaping object 210 is not destroyed.

Also, the inclined portion 224 of the blade 202 functions as a buffer, and this buffer stores and carries the removed powder material 220, so an extra powder material 220 can efficiently be removed. Note that the powder material 220 removed by the blade 202 is discarded at the end of the shaping tank 240. The discarded powder material 220 can also be collected and reused.

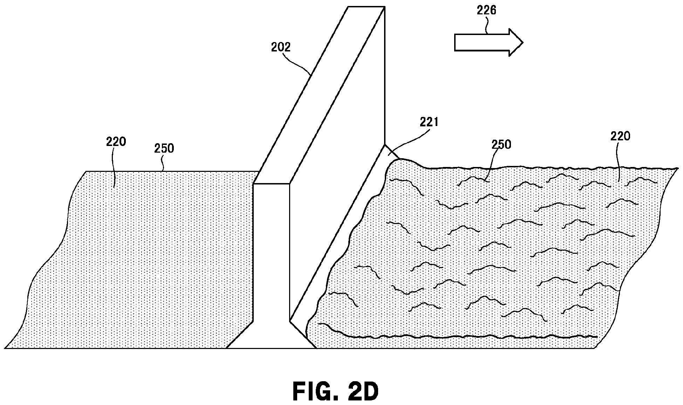

Fig. 2D is a perspective view for explaining the blade of the three-dimensional laminating and shaping apparatus according to this example embodiment. Fig. 2D shows the way the blade 202 squeegees the powder material 220 spread above the shaping table 230, and the blade 202 moves in a moving direction 226, that is, moves from the left to the right on the drawing surface of Fig. 2D. The projection 221 is formed over the whole horizontal length of the blade 202. That is, the projection 221 is formed along a horizontal direction perpendicular to the moving direction 226 and parallel to a spreading direction of the surface 250.

The surface 250 of the powder material 220 in the uppermost layer on the side (the left side in Fig. 2D) over which the blade 202 has passed is flat. On the other hand, the surface 250 of the powder material 220 in the uppermost layer on the side (the right side in Fig. 2D) over which the blade 202 is going to pass is not squeegeed and hence is not flat. The powder material 220 scraped away by the blade 202 is placed on the inclined portion 224 (the buffer) and carried.

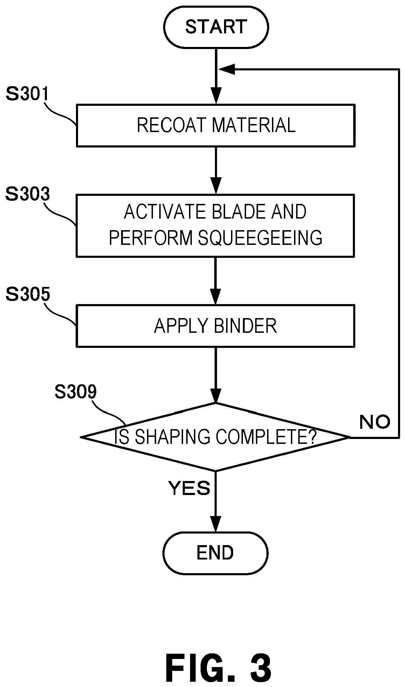

Fig. 3 is a flowchart for explaining the procedure of the three-dimensional laminating and shaping apparatus 200 according to this example embodiment. A CPU (Central Processing Unit) (not shown) executes this flowchart by using a RAM (Random Access Memory) (not shown), and implements the functional constituting parts of the three-dimensional laminating and shaping apparatus 200 shown in Fig. 2A. In step S301, the three-dimensional laminating and shaping apparatus 200 recoats the powder material 220 above the shaping table 230. In step S303, the three-dimensional laminating and shaping apparatus 200 activates the blade 202. Then, the three-dimensional laminating and shaping apparatus 200 forms the surface 250 by squeegeeing the powder material 220 supplied by recoating by using the blade 202. In step S305, the three-dimensional laminating and shaping apparatus 200 applies a binder as a binding agent to the formed surface 250. Since the powder material 220 is coated with a chemical agent, the powder material 220 hardens when the binder is applied. In step S309, the three-dimensional laminating and shaping apparatus 200 determines whether the shaping of the three-dimensional laminating and shaping object 210 is complete. If it is determined that the shaping is not complete (NO in step S309), the three-dimensional laminating and shaping apparatus 200 returns to step S301 and repeats the subsequent steps. If it is determined that the shaping is complete (YES in step S309), the three-dimensional laminating and shaping apparatus 200 terminates the procedure.

According to this example embodiment, the blade has the projections, so the powder supplied by recoating is neither dragged nor curled up when the powder material is flattened. Also, since the powder is neither dragged nor curled up, the already shaped three-dimensional laminating and shaping object is not destroyed, so an extra powder material can effectively be removed. In addition, since the already shaped three-dimensional laminating and shaping object is not destroyed, a three-dimensional laminating and shaping object can be shaped with high accuracy.

### [Third Example Embodiment]

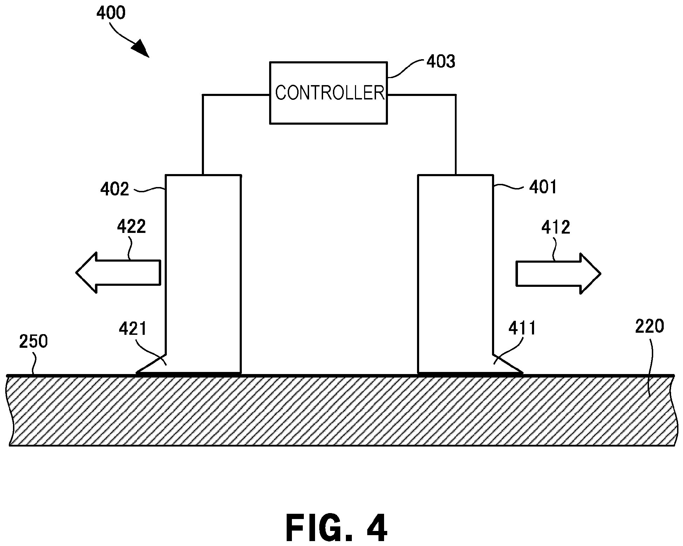

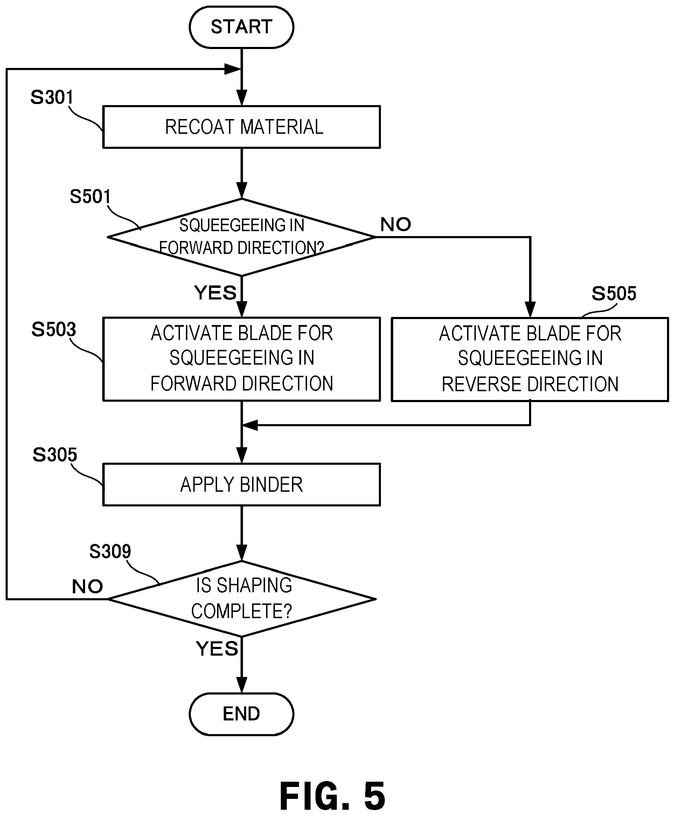

A three-dimensional laminating and shaping apparatus according to the third example embodiment of the present invention will be explained below with reference to Figs. 4 and 5. Fig. 4 is a view for explaining the three-dimensional laminating and shaping apparatus according to this example embodiment. The difference of the three-dimensional laminating and shaping apparatus according to this example embodiment from the abovementioned second example embodiment is that the apparatus includes two blades. Other parts and operations are the same as the second embodiment, so the same reference numerals denote the same parts and operations, and detailed explanations thereof will be omitted.

A three-dimensional laminating and shaping apparatus 400 includes blades 401 and 402 and a controller 403. The blades 401 and 402 are so arranged that projections 411 and 421facing away each other. That is, the projection 411 of the blade 401 is facing in a traveling direction 412, and the projection 421 of the blade 402 is facing in a traveling direction 422. Also, the sectional shapes of the blades 401 and 402 are boot-like shapes. That is, the blades 401 and 402 have shapes in which the projections 411 and 421 are formed in positions corresponding to the toes of the boots, and no projections are formed in positions corresponding to the heels of the boots.

When the rightward direction in Fig. 4 is the traveling direction 412 (the forward direction) of the blade 401, the blade 401 has the projection 411 on the side of the traveling direction 412 (the forward side). Similarly, when the leftward direction in Fig. 4 is the traveling direction 422 (the forward direction) of the blade 402, the blade 402 has the projection 411 on the side of the traveling direction 422 (the forward side). The blades 401 and 402 have no projection on the reverse side. That is, the blades 401 and 402 have the projections 411 and 412 extended in only the traveling directions 412 and 422, respectively. The blade 401 is used to squeegee the powder material 220 supplied by recoating in the traveling direction 412. The blade 402 is used to squeegee the powder material 220 supplied by recoating in the traveling direction 422.

The controller 403 controls the recoating of the powder material 220 by the recoater 202 (not shown). In addition, the controller 403 selects the blade 401 or 402 to be used in accordance with the direction of squeegeeing, and controls squeegeeing performed on the powder material 220 supplied by recoating by the blade 401 or 402.

The blades 401 and 402 operate together or integrally. When squeegeeing the powder material 220 in the traveling direction 412, for example, the controller 403 squeegees the powder material 220 by using the blade 401. When the blade 401 performs squeegeeing by moving on the surface 250, the controller 403 controls the movement of the blade 402 that does not perform squeegeeing so that the blade 402 is floated up and separated from the surface 250, in order to prevent the blade 402 from coming into contact with the surface 250.

By contrast, when squeegeeing the powder material 220 in the traveling direction 422 by using the blade 402, the controller 403 controls the movement of the blade 401 that does not perform squeegeeing so that the blade 401 is floated up and separated from the surface 250.

Note that when performing squeegeeing in the traveling direction 412, for example, the controller 403 performs squeegeeing by using the blade 401. In this case, the controller 403 adjusts the amount of the powder material 220 to be removed by adjusting the amount by which the blade 401 is separated from the surface 250. Likewise, when performing squeegeeing in the traveling direction 422, for example, the controller 403 performs squeegeeing by using the blade 402. In this case, the controller 403 adjusts the amount of the powder material 220 to be removed by adjusting the amount by which the blade 402 is separated from the surface 250. As described above, the controller 403 can adjust the amount by which the blade 401 or 402 is floated from the surface 250, and hence can adjust the amount of the powder material 220 to be squeegeed.

Fig. 5 is a flowchart for explaining the procedure of the three-dimensional laminating and shaping apparatus according to this example embodiment. A CPU (not shown) executes this flowchart by using a RAM (not shown) and implements the functional constituting parts of the three-dimensional laminating and shaping apparatus 400 shown in Fig. 4.

In step S501, the three-dimensional laminating and shaping apparatus 400 determines whether the squeegeeing direction is the forward direction (the traveling direction 412). If it is determined that the squeegeeing direction is the forward direction (YES in step S501), the three-dimensional laminating and shaping apparatus 400 advances to step S503. In step S503, the three-dimensional laminating and shaping apparatus 400 activates the blade 401 for squeegeeing the powder material 220 in the forward direction, and forms the surface 250 by squeegeeing the powder material 220. In this case, the three-dimensional laminating and shaping apparatus 400 controls the movement of the blade 402 that does not perform squeegeeing so that the blade 402 is floated, in order to prevent the blade 402 from coming into contact with the surface 250.

If it is determined that the squeegeeing direction is not the forward direction (NO in step S501), the three-dimensional laminating and shaping apparatus 400 advances to step S505. In step S505, the three-dimensional laminating and shaping apparatus 400 activates the blade 402 for squeegeeing the powder material 220 in the reverse direction (the traveling direction 422), and forms the surface 250 by squeegeeing the powder material 220. In this case, the three-dimensional laminating and shaping apparatus 400 controls the movement of the blade 401 that does not perform squeegeeing so that the blade 401 is floated, in order to prevent the blade 401 from coming into contact with the surface 250.

According to this embodiment, the blades can be selected, so maintenance can be performed on the blade that is not in use. Also, since the two blades are used, each blade can be downsized. Furthermore, since the blade has the projection, an extra powder material can effectively be removed without destroying the already shaped three-dimensional laminating and shaping object. In addition, since the already shaped three-dimensional laminating and shaping object is not destroyed, a three-dimensional laminating and shaping object can be shaped with high accuracy.

### [Fourth Example Embodiment]

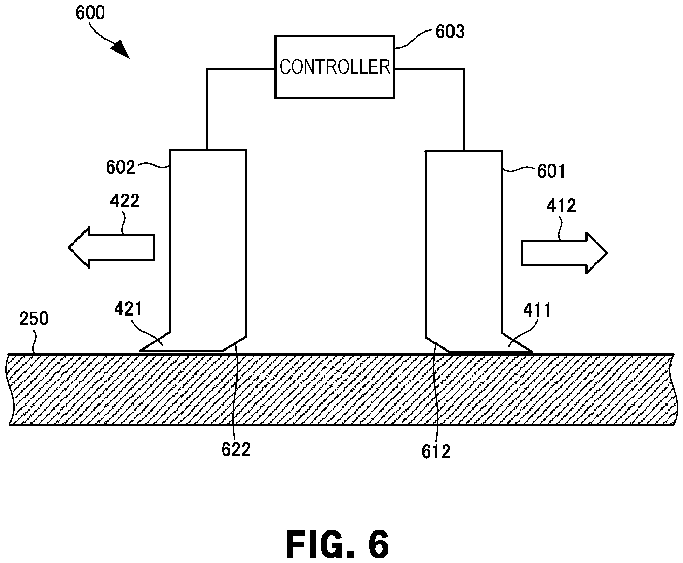

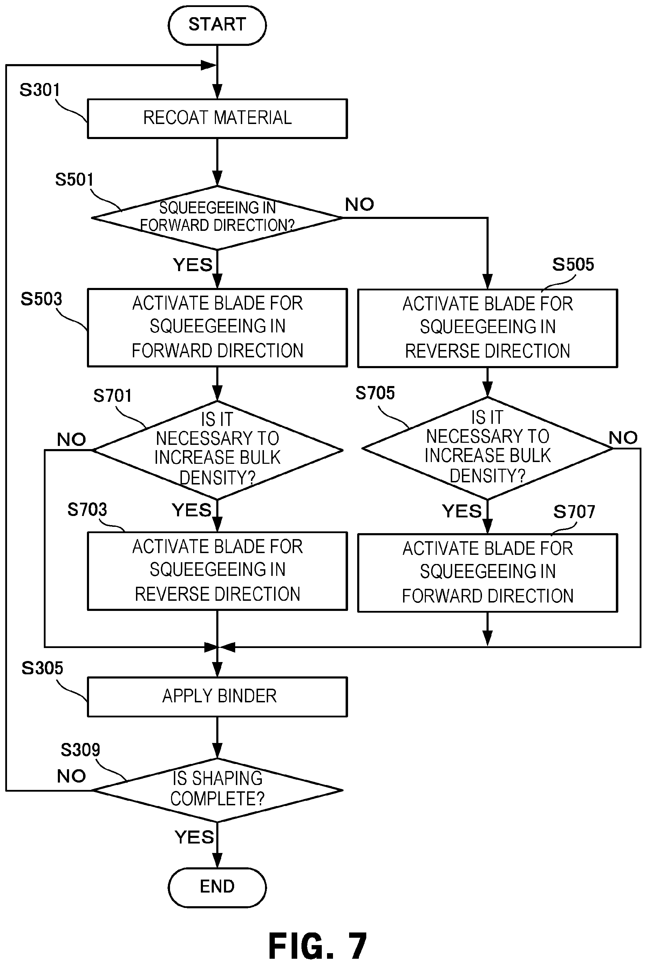

A three-dimensional laminating and shaping apparatus according to the fourth example embodiment of the present invention will be explained below with reference to Figs. 6 and 7. Fig. 6 is a view for explaining the three-dimensional laminating and shaping apparatus according to this example embodiment. The difference of the three-dimensional laminating and shaping apparatus according to this example embodiment from the abovementioned second and third example embodiments is that the apparatus includes a blade having a notch. Other parts and operations are the same as the second and third example embodiments, so the same reference numerals denote the same parts and operations, and detailed explanations thereof will be omitted.

A three-dimensional laminating and shaping apparatus 600 includes blades 601 and 602 and a controller 603. The blade 601 has a notch 612 on the side opposite to a projection 411. The notch 612 of the blade 601 is formed inside the blade 601 in a direction opposite to a traveling direction 412. Likewise, the blade 602 has a notch 622 on the side opposite to a projection 421. The notch 622 of the blade 602 is formed inside the blade 602 in a direction opposite to a traveling direction 422. That is, the boot-like blades 601 and 602 have the notches 612 and 622 in positions corresponding to the heels of the boots.

The blades 601 and 602 are so arranged that the projections 411 and 421facing away each other. That is, the projection 411 of the blade 601 is facing in the traveling direction 412, and the projection 421 of the blade 602 is facing in the traveling direction 422. In addition, the blades 601 and 602 are so arranged that the notches 612 and 622 facing each other. That is, the notch 612 of the blade 601 is formed on the side opposite to the traveling direction 412, and the notch 622 of the blade 602 is formed on the side opposite to the traveling direction 422.

The notched surfaces of the notches 612 and 622 face obliquely downward. Therefore, when the blades 601 and 602 are moved and the notched surfaces of the notches 612 and 622 squeegee a powder material 220, the powder material 220 is pushed downward (toward a surface 250). When the powder material 220 can thus be pushed toward the surface 250, the bulk density of the powder material 220 on the surface 250 can be increased. This makes it possible to increase the shaping accuracy of a three-dimensional laminating and shaping object 210 to be shaped.

The controller 603 removes an extra powder material 220 by controlling the operations of the blades 601 and 602. Also, the controller 603 adjusts the bulk density of the powder material 220 by controlling the operations of the blades 601 and 602. When squeegeeing the powder material 220 in the traveling direction 412, for example, the controller 603 squeegees the powder material 220 by controlling the operation of the blade 601.

To increase the bulk density of the powder material 220 in addition to squeegeeing the powder material 220 by the blade 601, the controller 603 moves the blade 602 on the side opposite to the blade 601 in the traveling direction 412, thereby increasing the bulk density of the powder material 220 by the notch 622.

Similarly, to squeegee the powder material 220 in the traveling direction 422 and increase the bulk density of the powder material 220 in addition to squeegeeing the powder material 220 by the blade 602, the controller 603 moves the blade 601 on the side opposite to the blade 602 in the traveling direction 422. Then, the controller 603 increases the bulk density of the powder material 220 by the notch 612 of the blade 601.

Fig. 7 is a flowchart for explaining the procedure of the three-dimensional laminating and shaping apparatus according to this example embodiment. A CPU (not shown) executes this flowchart by using a RAM (not shown), and implements the functional constituting parts of the three-dimensional laminating and shaping apparatus 600 shown in Fig. 6.

In steps S701 and S705, the three-dimensional laminating and shaping apparatus 600 determines whether it is necessary to increase the bulk density of the powder material 220 supplied by recoating. If it is determined that it is necessary to increase the bulk density of the powder material 220 (YES in steps S701 and S705), the three-dimensional laminating and shaping apparatus 600 activates the blade 602 (the blade 601) on the side opposite to the blade 601 (the blade 602) that performs squeegeeing so as to remove the powder material 220, in steps S703 and S707, respectively. Then, the three-dimensional laminating and shaping apparatus 600 pushes the powder material 220 downward by the notch 612 of the activated blade 601 (the notch 622 of the blade 602), thereby increasing the bulk density of the powder material 220.

If it is determined that it is unnecessary to increase the bulk density of the powder material 220 (NO in steps S701 and S705), the three-dimensional laminating and shaping apparatus 600 advances to step S305.

According to this example embodiment, the bulk density of the powder material can be increased because the blade has the notch. Since the notch can increase the bulk density of the powder material, an accurate three-dimensional laminating and shaping object can be shaped. Furthermore, since the blade has the projection, an extra powder material can effectively be removed without destroying the already shaped three-dimensional laminating and shaping object. Also, since the already shaped three-dimensional laminating and shaping object is not destroyed, a three-dimensional laminating and shaping object can be shaped with high accuracy.

### [Fifth Example Embodiment]

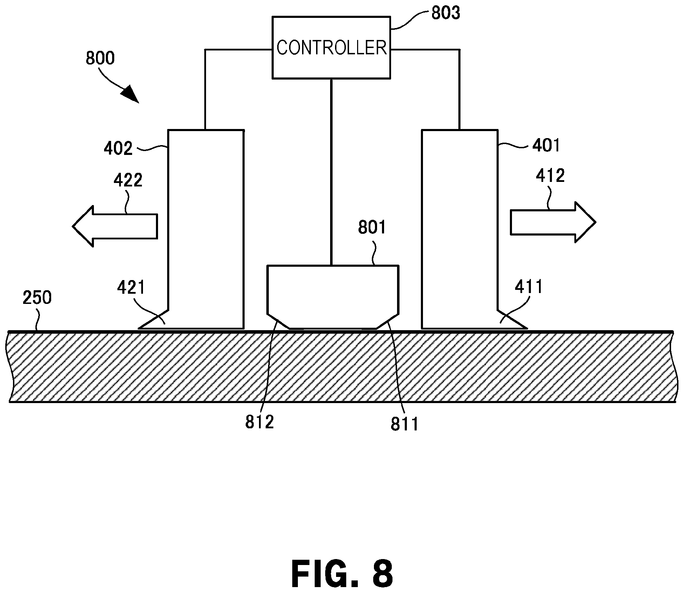

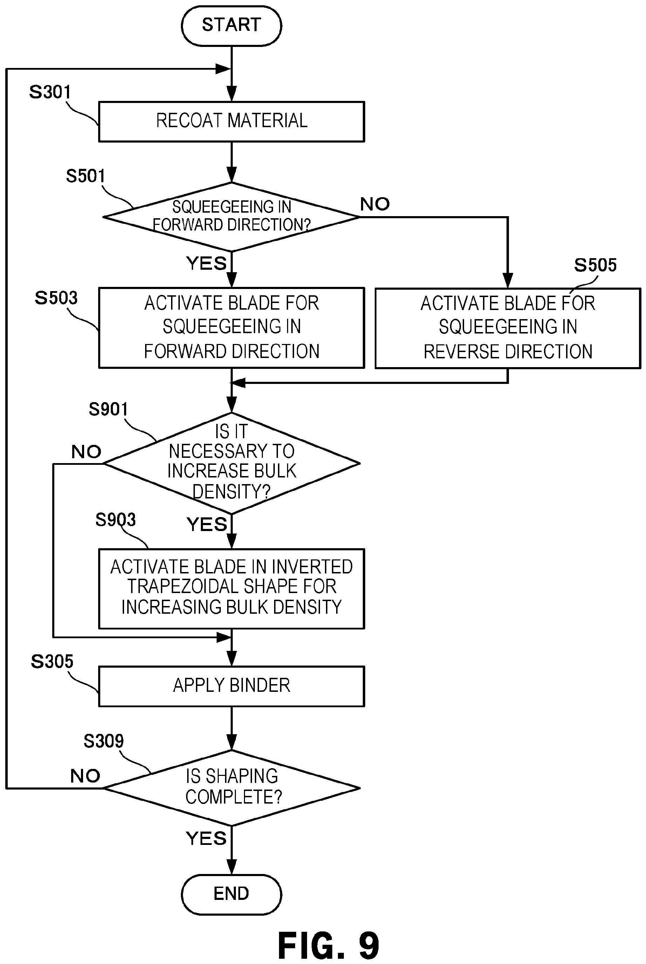

A three-dimensional laminating and shaping apparatus according to the fifth example embodiment of the present invention will be explained below with reference to Figs. 8 and 9. Fig. 8 is a view for explaining the three-dimensional laminating and shaping apparatus according to this example embodiment. The difference of the three-dimensional laminating and shaping apparatus according to this example embodiment from the abovementioned fourth example embodiment is that the apparatus further includes other blade having an inverted trapezoidal shape in addition to the blades 401 and 402. Other parts and operations are the same as the fourth example embodiment, so the same reference numerals denote the same parts and operations, and detailed explanations thereof will be omitted.

A three-dimensional laminating and shaping apparatus 800 further includes a blade 801. That is, the three-dimensional laminating and shaping apparatus 800 has a blade set including the two blades 401 and 402 and the other blade 801. The blade 801 has an inverted trapezoidal shape as a sectional shape formed by a plane parallel to the moving directions (traveling directions 412 and 422). Since the blade 801 has the inverted trapezoidal shape, notches 811 and 812 are formed in the blade 801. The notched surfaces of the notches 811 and 812 face obliquely downward. When the blade 801 moves on a surface 250, the notched surfaces of the notches 811 and 812 push a powder material 220 downward (toward the surface 250), and the bulk density of the powder material 220 on the surface 250 increases.

A controller 803 squeegees the powder material 220 and increases the bulk density of the powder material 220 by controlling the operations of the blades 401, 402, and 801.

Fig. 9 is a flowchart for explaining the procedure of the three-dimensional laminating and shaping apparatus according to this example embodiment. A CPU (not shown) executes this flowchart by using a RAM (not shown), and implements the functional constituting parts of the three-dimensional laminating and shaping apparatus 800 shown in Fig. 8.

In step S901, the three-dimensional laminating and shaping apparatus 800 determines whether it is necessary to increase the bulk density of the powder material 220 on the surface 250. If it is necessary to increase the bulk density (YES in step S901), the three-dimensional laminating and shaping apparatus 800 advances to step S903. In step S903, the three-dimensional laminating and shaping apparatus 800 activates the blade 801 for increasing the bulk density, and moves the blade 801 on the surface 250, thereby increasing the bulk density of the powder material 220. If it is unnecessary to increase the bulk density (NO in step S901), the three-dimensional laminating and shaping apparatus 800 advances to step S305.

Since this example embodiment includes the bulk density increasing blade having the notches, the bulk density of the powder material can be increased more reliably. Since the notches can increase the bulk density of the powder material, an accurate three-dimensional laminating and shaping object can be shaped. Furthermore, since the blade has the notches, an extra powder material can effectively be removed without destroying the already shaped three-dimensional laminating and shaping object. Since the already shaped three-dimensional laminating and shaping object is not destroyed, a three-dimensional laminating and shaping object can be shaped with high accuracy.

### [Sixth Example Embodiment]

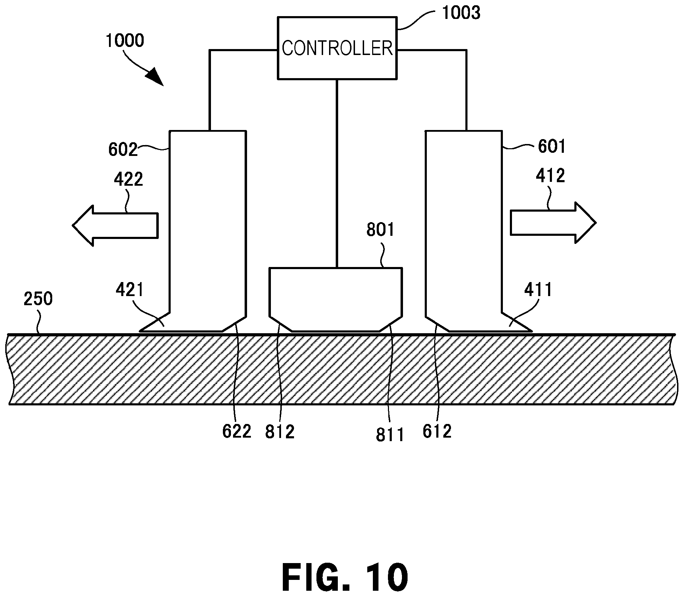

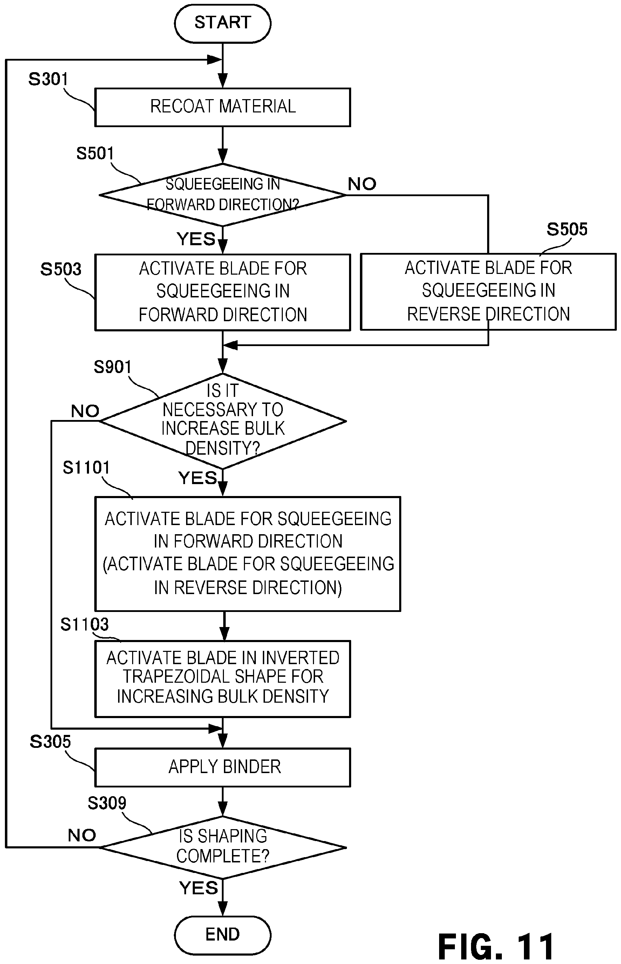

A three-dimensional laminating and shaping apparatus according to the sixth example embodiment of the present invention will be explained below with reference to Figs. 10 and 11. Fig. 10 is a view for explaining the three-dimensional laminating and shaping apparatus according to this example embodiment. The difference of the three-dimensional laminating and shaping apparatus according to this example embodiment from the abovementioned second to fifth example embodiments is that the apparatus includes three blades having notches, the blades 601, 602 and 801. Other parts and operations are the same as the second to fifth example embodiments, so the same reference numerals denote the same parts and operations, and detailed explanations thereof will be omitted.

A three-dimensional laminating and shaping apparatus 1000 includes blades 601, 602, and 801. That is, the three-dimensional laminating and shaping apparatus 1000 has a blade set including the blades 601, 602, and 801. The blade 601 has a notch 612, the blade 602 has a notch 622, and the blade 801 has notches 811 and 812. That is, the blades 601, 602, and 801 of the three-dimensional laminating and shaping apparatus 1000 have the notches 612, 622, 811, and 812.

In the three-dimensional laminating and shaping apparatus 1000, a combination of the notches 811 and 622 and a combination of the notches 812 and 612 can increase the bulk density of a powder material 220. Also, since the two notches can push the powder material 220, it is possible to adjust the increase amount of the bulk density more finely.

For example, when moving the blades 601, 602, and 801 in a traveling direction 412, a controller 1003 can remove an extra powder material 220 by a projection 411 by operating the blade 601. In addition, the controller 1003 can push the powder material 220 by the notches 811 and 622 by operating the blades 602 and 801, thereby increasing the bulk density of the powder material 220 on the surface 250. Note that the increase amount of the bulk density can be adjusted by using one or both of the notches 811 and 622. This similarly applies to a case in which the blades 601, 602, and 801 are moved in a traveling direction 422 as the opposite direction.

Fig. 11 is a flowchart for explaining the procedure of the three-dimensional laminating and shaping apparatus 1000 according to this example embodiment. A CPU (not shown) executes this flowchart by using a RAM (not shown), and implements the functional constituting parts of the three-dimensional laminating and shaping apparatus 1000 shown in Fig. 10. In step S1101, the three-dimensional laminating and shaping apparatus 1000 activates the blade 601 for the forward direction (the traveling direction 412) if coming from step S505 or the blade 602 for the reverse direction (the traveling direction 422) if coming from step as503, and moves the activated blade on the surface 250 so as to increase the bulk density of the powder material 220. In step S1103, the three-dimensional laminating and shaping apparatus 1000 activates the inverted trapezoidal blade 801, and moves it on the surface 250 so as to increase the bulk density of the powder material 220. Note that the three-dimensional laminating and shaping apparatus 1000 may also execute one of steps S1101 and S1103.

According to this example embodiment, the powder material can be pushed by using the two notches, so it is possible to adjust the increase amount of the bulk density of the powder material more finely. Since the notches can increase the bulk density of the powder material, an accurate three-dimensional laminating and shaping object can be shaped. Furthermore, since the blades have the notches, an extra powder material can effectively be removed without destroying the already shaped three-dimensional laminating and shaping object. Since the already shaped three-dimensional laminating and shaping object is not destroyed, a three-dimensional laminating and shaping object can be shaped with high accuracy.

### [Seventh Example Embodiment]

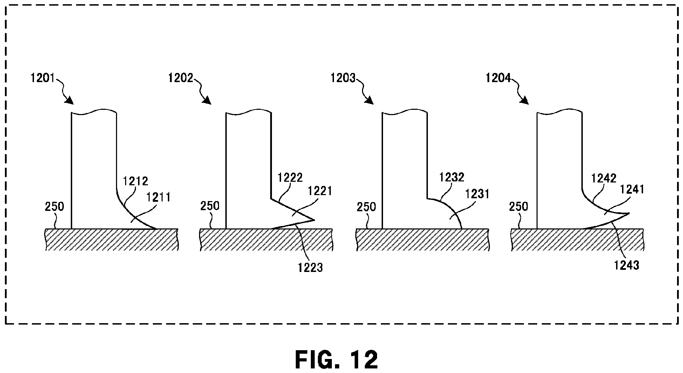

A three-dimensional laminating and shaping apparatus according to the seventh example embodiment of the present invention will be explained below with reference to Fig. 12. Fig. 12 is a view for explaining other examples of a blade of the three-dimensional laminating and shaping apparatus according to this example embodiment. A blade 1201 has a projection 1211, and an inclined portion 1212 curves to sink toward a surface 250 (toward the bottom surface of the blade 1201). A blade 1202 has a projection 1221 that spaces the bottom surface of the blade 1202 apart from the surface 250. The projection 1221 has an upper inclined portion 1222 and a lower inclined portion 1223. A blade 1203 has a projection 1231, and an inclined portion 1232 of the projection 1231 curves to expand to the side opposite to the surface 250. A blade 1204 has a projection 1241, and an upper inclined portion 1242 of the projection 1241 curves to sink toward the surface 250. A lower inclined portion 1243 (on the side of the surface 250) of the projection 1241 curves to sink toward the surface 250. The inclined portion 1243 is spaced apart from the surface 250.

The blades 1201, 1202, 1203, and 1204 have no notch in Fig. 12, but the blades 1201, 1202, 1203, and 1204 may also have notches. Note that the blades 1201, 1202, 1203, and 1204 explained in this example embodiment may be used instead of the blades 202, 401, 402, 601, and 602 explained in the second to sixth example embodiments.

### [Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program, such as a radiation irradiation control program, for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

## Claims

1. A blade used in a three-dimensional laminating and shaping apparatus for flattening a surface of a powder material spread on a shaping table while moving horizontally, comprising:
a bottom surface in contact with the surface of the powder material; and
a projection extended from the bottom surface in at least one of moving directions along which the blade moves.

2. The blade according to claim 1, wherein the blade comprises two projections extended in both moving directions and reciprocates on the surface of the powder material.

3. The blade according to claim 1, wherein the blade comprises a projection extended in only one moving direction.

4. The blade according to claim 3, further comprising a notch on a side opposite to the projection.

5. The blade according to any one of claims 1 to 4, wherein the projection has an inclined portion that makes an acute angle with the bottom surface.

6. The blade according to any one of claims 1 to 3, wherein a sectional shape of the blade, which is formed by a plane parallel to the moving direction of the blade, includes one of a conical flask shape and a boot-like shape.

7. A three-dimensional laminating and shaping apparatus comprising:
at least one blade according to any one of claims 1 to 6;
a recoater that recoats a powder material used for shaping a three-dimensional laminating and shaping object above a shaping table; and
a controller that controls an operation of the recoater and an operation of the at least one blade.

8. The three-dimensional laminating and shaping apparatus according to claim 7, wherein said apparatus comprises two blades according to any one of claims 1 to 6,
wherein the two blades are arranged such that projections of the two blades face outward each other.

9. The three-dimensional laminating and shaping apparatus according to claim 7, wherein said apparatus comprises a blade set including:
two blades according to any one of claims 1 to 6; and
other blade that has an inverted trapezoidal shape and moves on the shaping table such that the powder material spread on the shaping table flattens and a bulk density of the spread powder material increases,
wherein the two blades are arranged on both sides of the other blade such that the projections of the two blades are positioned far from the other blade, and
said controller further controls an operation of the other blade.

10. A method for controlling a three-dimensional laminating and shaping apparatus according to claim 9, comprising:
recoating a powder material used for shaping a three-dimensional laminating and shaping object above a shaping table; and
controlling an operation of the recoater, an operation of the two blades, and an operation of the other blade.

11. A computer program for causing a computer to execute a method for controlling a three-dimensional laminating and shaping apparatus according to claim 9, the method comprising:
recoating a powder material used for shaping a three-dimensional laminating and shaping object above a shaping table; and
controlling an operation of the recoater, an operation of the two blades, and an operation of the other blade.
